# EUROPÄISCHE PATENTSCHRIFT

(11) **EP 1 674 756 B1**
(45) Veröffentlichungstag und Bekanntmachung des Hinweises auf die Patenterteilung: **25.05.2016**
(21) Anmeldenummer: 05023385.7
(22) Anmeldetag: 26.10.2005
(51) Int. Cl.: F16D 69/02, F16D 65/00, C04B 35/80

(54) **Bremsvorrichtung für ein Fahrzeug, insbesondere für ein Kraftfahrzeug**
Braking system for a vehicle, in particular a motor vehicle
Systeme de frein pour un véhicule, notamment un véhicule automobile

(30) Priorität: 23.12.2004 DE 102004062082
(43) Veröffentlichungstag der Anmeldung: 28.06.2006
(73) Patentinhaber: AUDI AG, 85045 Ingolstadt (DE)
(72) Erfinder: Waninger, Robert, 85055 Ingolstadt (DE); Zupan, Nikola, 85104 Pförring (DE)
(74) Vertreter: Asch, Konrad

(56) Entgegenhaltungen:
- US-A- 6 006 885
- US-A1- 2003 138 672
- US-A1- 2004 204 533

## Beschreibung

Die Erfindung betrifft eine Bremsvorrichtung für ein Fahrzeug, insbesondere für ein Kraftfahrzeug, nach dem Oberbegriff des Anspruchs 1.

Eine allgemein bekannte, gattungsgemäße Bremsvorrichtung für ein Kraftfahrzeug weist eine Bremsscheibe und einen Reibbelag auf. Konkret ist der Reibbelag durch einen Bremsbelag gebildet, wobei während eines Bremsvorganges eine Reibverbindung zwischen der Bremsscheibe und dem Bremsbelag hergestellt wird.

Bei der Herstellung von Bremsscheiben werden heutzutage vermehrt Mehrstoff-Verbundsysteme mit einer keramischen Matrix eingesetzt. Die dabei verwendete Matrix besteht bevorzugt aus Silizium (Si) oder Siliziumcarbiden (SiC), die Kohlenstofffasern oder kohlenstoffhaltige Fasern jeweils als Verstärkungsfasern enthält. Die hieraus gebildeten siliziuminfiltrierten Kohlenstofffaser-Verbundwerkstoffe weisen auch bei hohen Belastungen und/oder Temperaturen gute tribologische Eigenschaften auf, was bei einer Anwendung als Bremsscheibe vorteilhaft ist. Aufgrund der unterschiedlichen Wärme- und Volumenausdehnungen zwischen der Matrix derartiger Verbundwerkstoffe und den Verstärkungsfasern kann sich in der Abkühlphase von der Herstellungstemperatur von ca. 1600°C bis zu einer Raumtemperatur von ca. 20°C eine innere Materialspannung aufbauen, die sich durch Entspannungsrisse entlastet. Diese bilden sich in der Si- bzw. SiC-Matrix in mikroskopisch und/oder makroskopische Größenordnung, wobei beispielsweise Kohlenstofffasern als Rissstoppelemente dienen können. Die Entspannungsrisse führen im Verbundwerkstoff zu kanalartigen, dreidimensionalen sowie netzartigen Risskanälen, die den gesamten Bremsscheibenkörper durchziehen können. Diese Risskanäle wirken auf Flüssigkeiten kapillarfördernd, so dass es unter bestimmten Bedingungen zu Flüssigkeitseinlagerungen kommen kann. Durch derartige Einlagerungen von Flüssigkeiten oder auch von aus dem Bremsbelag oder der Umgebung in die Bremsscheibe eingebrachten Stoffen kann es zu einer Schädigung des Verbundwerkstoffes und/oder zu einer verstärkten Oxidation der Kohlenstofffasern bzw. der kohlenstoffhaltigen Fasern kommen. Dadurch kann die Grundfestigkeit des Verbundwerkstoffes geschwächt werden, was zu einer Reduzierung der Lebensdauer der Bremsscheibe führen kann.

Um derartige Schädigungen der Bremsscheibe verhindern bzw. reduzieren zu können, sind unterschiedliche Maßnahmen bekannt. So ist beispielsweise aus der DE 101 33 635 A1 eine Bremsscheibe bekannt, die aus dem oben näher beschriebenen Verbundwerkstoff hergestellt ist. Im Querschnitt gesehen weist diese Bremsscheibe eine mit dem Bremsbelag tribologisch zusammenwirkende und dem Verschleiß exponierte Zone als Reibfläche und eine darunterliegende Tragzone auf. Die Reibfläche weist Reib- und Verschleißeigenschaften auf, während die Tragzone die Reib- oder Bremsenergie aufnehmen und ableiten soll. Zwischen der Reibfläche und der Tragzone ist eine Schutzschicht angeordnet, die Additive für die Ausbildung selbstheilender Schichten enthält. Durch diese Additive kann die Oxidation des in der Bremsscheibe befindlichen Kohlenstoff bzw. die Oxidation der oxidationsempfindlichen Anteile der Matrix reduziert bzw. verhindert werden. Zudem können Additive vorgesehen sein, die selbstheilende Schichten ausbilden.

Des Weiteren ist aus der DE 101 61 218 B4 eine für den Oxidationsschutz faserverstärkte, kohlenstoffhaltige Bremsscheibe, deren Matrix in der Randschicht Siliziumcarbid (SiC) enthält, bekannt. Eine solche Bremsscheibe wird bei der Herstellung mit einer wässrigen, phosphathaltigen Lösung imprägniert, wobei bei einer anschließenden Wärmebehandlung daraus nicht lösliche Verbindungen, die zur Ausbildung eines selbstheilenden Glases geeignet sind, gebildet werden. Zudem wird die Bremsscheibe zur Ausbildung von Siliziumoxid (SiO₂) oxidierend behandelt.

Mit derartigen selbstheilenden Gläsern kann im Neuzustand der Bremsscheibe ein gewisser Schutz gewährleistet werden, wobei dieser Schutz im Betrieb der Bremsvorrichtung aufgrund der Belastungskollektive von Temperatur, Druck und Nebenreaktionen mit vornehmlich Sauerstoff und anderen Elementen, wie z. B. Zink (Zn), Natrium (Na) oder Chlor (Cl), nachteilig aufgebrochen werden kann, so dass die selbstheilende Wirkung nur teilweise unter ganz bestimmten Bedingungen erfolgen kann. Zudem können im Betrieb der Bremsvorrichtung neue Risskanäle und Kapillare durch Temperaturdifferenzen und den damit einhergehenden Spannungen entstehen, die mittels den oben beschriebenen Maßnahmen nicht bzw. nur ungenügend geheilt werden können. Ebenso werden die durch Oxidation entstehenden Hohlräume und Oberflächenvergrößerungen oxidativer Angriffsflächen sehr schnell gebildet, die nachteilig durch die oben beschriebene Neubildung von Gläsern nicht im benötigten Maße verhindert werden kann. Damit werden durch Oxidation der Kohlenstofffasern ständig neue Kapillare erzeugt, was zu einer schneller fortschreitenden oxidativen Reaktion und damit zur Zerstörung der Bremsscheibe führt.

Aus der US 2004/2045333 A1 sind Maßnahmen zur Verbesserung der Verschleißfestigkeit des Bremsbelages bekannt. So kann der Bremsbelag mit einer wässrigen Salzlösung imprägniert werden, die sich bei der anschließenden Wärmebehandlung des Bremsbelages in eine Glasphase umwandelt. Aus der US 6,006,885 ist eine Reibungsvorrichtung bekannt, die eine Reibungsscheibe aus Kohlenstoffverbundmaterial aufweist. Deren Poren dient als ein Ölreservoir.

Aufgabe der Erfindung ist es, eine alternative Bremsvorrichtung für ein Fahrzeug, insbesondere für ein Kraftfahrzeug, zu schaffen, mit der ein optimaler Schutz, insbesondere ein optimaler Oxidationsschutz und/oder ein optimaler Schutz gegen die Aufnahme von Feuchtigkeit, für eine Bremsscheibe auf einfache Weise sehr gut möglich wird.

Diese Aufgabe wird mit den Merkmalen des Anspruchs 1 gelöst.

Gemäß Anspruch 1 bildet der Reibbelag ein Reservoir für ein Schutzmittel aus, das während einer Reibverbindung zwischen dem Reibbelag und der Bremsscheibe eine bezogen auf die Dauer der Reibverbindung bestimmte Schutzmittelmenge auf die Bremsscheibe überträgt.

Erfindungsgemäß wird hier somit ein bezogen auf die Bremsscheibe äußeres Schutzmittel-Reservoir zur Verfügung gestellt, mit dem ständig Schutzmittel zur Bremsscheibe hin nachgefördert werden kann. D. h., dass während der Reibverbindung durch Abrieb ständig neues Schutzmittel vom Reibbelag auf die Bremsscheibe übertragen wird. Damit wird im Betrieb der Bremsvorrichtung bei jeder Herstellung der Reibverbindung Schutzmittel auf die Bremsscheibe übertragen, so dass dadurch ein optimaler Schutz, insbesondere ein optimaler Oxidationsschutz und/oder ein optimaler Schutz gegen Feuchtigkeitsaufnahme, für die Bremsscheibe erhalten werden kann. Insbesondere bei sich im Verlauf des Bremsbetriebes neu bildenden Rissen, Kapillaren, etc. ist durch die ständige Nachförderung von Schutzmittel eine Schutzwirkung bzw. eine selbstheilende Wirkung auch an solchen Stellen der Bremsscheibe möglich, wo ursprünglich noch keine Risse und Kapillare vorhanden waren, so dass dadurch vorteilhaft die Lebensdauer der Bremsscheibe verlängert werden kann. Die als Additive im äußeren Reservoir angeordneten Schutzmittel können beispielsweise hydrophobe Bestandteile enthalten, die in die in der Bremsscheibe ausgebildeten Kapillare eindringen und dadurch die Kapillarwirkung verringern bzw. ganz verhindern Erfindungsgemäß werden bei der Übertragung des Schutzmittels Rohstoffe zur Bildung von selbstheilenden Gläsern in die Bremsscheibe eingebracht.

Auch eine Anbringung eines hydrophoben Schutzfilms auf der Reibfläche der Bremsscheibe zur Verhinderung des Eindringens von Flüssigkeiten in die Kapillare der Bremsscheibe ist gut möglich. Zudem können die Schutzmittel sogenannte "Opferelemente" enthalten, die mit dem in der Bremsscheibe vorhandenen Sauerstoff eine Bindung eingehen, so dass damit eine etwaige Oxidation von oxidationsempfindlichen Bestandteilen der Bremsscheibe verhindert ist.

Dabei wird erfindungsgemäß das auf die Bremsscheibe übertragene Schutzmittel durch die bei der Reibverbindung entstehende Reibungswärme in ein Reaktionsprodukt umgewandelt, das direkt in der Bremsscheibe eingelagert wird. Das Schutzmittel kann auch mit einem Reaktionspartner, beispielsweise aus der Umgebung der Bremsscheibe, in das Reaktionsprodukt umgewandelt werden. Je nach Ausführung des Schutzmittels kann das Reaktionsprodukt direkt in die Bremsscheibe eingelagert werden, so dass in der Bremsscheibe vorhandene Risse bzw. Kapillare geschlossen werden bzw. die Kapillarwirkung verhindert und/oder vermindert wird. Sind in den Kapillaren in der Bremsscheibe wasserhaltige Lösungen vorhanden, die beispielsweise aus der Umgebung der Bremsscheibe kommen, so kann auch mit den aus dem Schutzmittel entstehenden Reaktionsprodukt die Oberflächenspannung dieser wasserhaltigen Lösungen vergrößert werden, um damit die Kapillarwirkung zu verhindern und/oder zu vermindern. Alternativ oder zusätzlich kann das auf die Bremsscheibe übertragene Schutzmittel mit einem stofflichen Bestandteil der Bremsscheibe zu einem Reaktionsprodukt reagieren. D. h., dass stoffliche Bestandteile der Bremsscheibe mit dem übertragenen Schutzmittel ein Reaktionsprodukt bilden, so dass etwaige die Bremsscheibe möglicherweise schädigende Bestandteile keine Reaktion mit den stofflichen Bestandteilen der Bremsscheibe für eine etwaige Schädigung derselben eingehen können, wodurch eine Schädigung der Matrix der Bremsscheibe verhindert wird. Die für die chemische Reaktion des Schutzmittels eventuell notwendige Aktivierungsenergie wird durch die bei der Reibverbindung entstehende Reibungswärme erzeugt. Ist der Reibbelag zugleich der Bremsbelag so wird bei jedem Bremsvorgang Reibungswärme erzeugt, so dass bei jedem Bremsvorgang Schutzmittel vom Bremsbelag in die Bremsscheibe nachgefördert wird.

Insbesondere die Übertragung von Schutzmitteln zum Oxidationsschutz ist bei einer gemäß Anspruch 2 hergestellten Bremsscheibe vorteilhaft, die aus einem, vorzugsweise faserverstärkten, kohlenstoffhaltigen und/oder oxidkeramischen Verbundwerkstoff hergestellt werden kann, dessen Matrix vorzugsweise wenigstens in einer Randschicht Siliziumcarbid (SiC) und/oder Silizium (Si) und/oder Siliziumlegierungen enthält. Sowohl der in der Bremsscheibe enthaltene Kohlenstoff als auch die in der Matrix der Bremsscheibe vorhandenen Siliziumbestandteile können oxidieren, was insbesondere durch die in der Bremsscheibe ausgebildeten Kapillare und der damit verbundenen Möglichkeit des Eindringens von oxidationsfördernden Rohstoffen beispielsweise aus der Umgebung der Bremsscheibe, gefördert werden kann. Um derartige Oxidationsvorgänge zu verhindern bzw. zu reduzieren, kann das im Schutzmittel-Reservoir des Reibbelags vorhandene Schutzmittel ein spezielles Oxidationsschutzmittel sein.

Grundsätzlich könnte es sich beim Reibbelag auch um einen Belag handeln, der separat zum Bremsbelag vorgesehen ist. Zweckmäßig und bevorzugt ist jedoch der Reibbelag nach Anspruch 3 gleichzeitig der Bremsbelag, in den das Schutzmittel-Reservoir integriert ist.

Gemäß einer Weiterbildung nach Anspruch 4 ist das Schutzmittel im Wesentlichen gleichmäßig über die Fläche und/oder Materialstärke verteilt im Bremsbelag angeordnet. Damit ist sichergestellt, dass auch bei einem durch das Bremsen bedingten Verschleiß des Bremsbelages zu jedem Zeitpunkt der Lebensdauer des Bremsbelages eine Übertragung der im Bremsbelag angeordneten Schutzmittel möglich ist. Durch die gleichmäßige Verteilung im Bremsbelag steht das Schutzmittel stets in gleichmäßigen Mengen zur Verfügung.

In einer konkreten Ausgestaltung (nicht erfindungsgemäß) kann das Schutzmittel Rhenium (Re) und/oder Bor (B) und/oder Titan (Ti) und/oder Silizium (Si) und/oder Siliziumcarbid (SiC) und/oder Kohlenstoff (C) und/oder Aluminium (Al) und/oder Phosphor (P) sein. Die Wahl des bzw. der Schutzmittel ist abhängig von der gewünschten Schutzwirkung an der Bremsscheibe. Grundsätzlich ist auch eine Kombination von mehreren Schutzmitteln im Reibbelag denkbar, wobei die oben angegebene Aufzählung an Schutzmitteln nur beispielhaft anzusehen ist und durch weitere Schutzmittel ergänzt werden kann.

Zudem kann das Schutzmittel auch eine hydrophobierende Schicht auf der Bremsscheibe ausbilden (nicht erfindungsgemäß). Damit kann eine Schutzwirkung gegen die Aufnahme von Feuchtigkeit erhalten werden, wodurch beispielsweise die Bremsscheibe potentiell schädigende Reaktionen verhindert bzw. wenigstens reduziert werden können.

Bei einem nicht von der Erfindung umfassten Vergleichsbeispiel soll die Schutzschicht in einer kohlenstofffaserverstärkten SiC-Matrix mittels der Oxidation von Bornitriden (BN) erfolgen. Hierzu ist eine Aktivierungstemperatur von 820°C erforderlich, um Boroxide, wie z. B. Bortrioxid (B₂O₃) zu bilden, die auch zu Boratgläser oxidiert werden können. Die Aktivierungstemperatur für diese chemische Reaktion wird in der Reibzwischenschicht des tribologischen Systems Reibbelag-Bremsscheibe während des Bremsvorgangs erreicht, bei dem die Bornitride somit vom Bremsbelag als äußerem Reservoir unter Oxidation in der Bremsscheibe eingelagert werden können.

## Patentansprüche

1. Bremsvorrichtung für ein Fahrzeug, insbesondere für ein Kraftfahrzeug,
mit einer Bremsscheibe und einem Reibbelag, wobei während des Bremsvorgangs eine Reibverbindung zwischen der Bremsscheibe und dem Reibbelag hergestellt ist,
**dadurch gekennzeichnet,**
**dass** der Reibbelag ein Reservoir für ein Oxidations-Schutzmittel, vorzugsweise Additive, ausbildet, in das Rohstoffe zur Bildung von selbstheilenden Gläsern ohne anschließende Wärmebehandlung eingebracht sind, welches Reservoir während der Reibverbindung zwischen dem Reibbelag und der Bremsscheibe das Schutzmittel auf die Bremsscheibe überträgt, welche Rohstoffe so angepasst sind, dass sie in der Bremsscheibe durch die bei der Reibverbindung entstehende Reibungswärme in ein selbstheilendes Glas umwandelbar sind.

2. Bremsvorrichtung nach Anspruch 1, **dadurch gekennzeichnet, dass** die Bremsscheibe aus einem faserverstärkten, kohlenstoffhaltigen und/oder oxidkeramischen Verbundwerkstoff hergestellt ist, dessen Matrix wenigstens in einer Randschicht Siliziumcarbid (SiC) und/oder Silizium (Si) und/oder Siliziumlegierungen enthält.

3. Bremsvorrichtung nach Anspruch 1 oder Anspruch 2, **dadurch gekennzeichnet, dass** der Reibbelag durch einen Bremsbelag gebildet ist.

4. Bremsvorrichtung nach Anspruch 3, **dadurch gekennzeichnet, dass** das Schutzmittel gleichmäßig über den Bremsbelag verteilt ist.

## Claims

1. Braking system for a vehicle, more particularly for a motor vehicle with a brake disk and a friction lining, wherein during the braking process a frictional connection between the brake disk and the friction lining is produced
**characterised in that**
the friction lining forms a reservoir for an antioxidant agent, preferably additives, into which raw materials for forming self-healing glasses without subsequent thermal treatment is introduced, said reservoir transferring the antioxidant agent to the brake disk during the frictional connection between the friction lining and the brake disk, said raw materials being adapted so that in the brake disks they can be converted through the friction heat occurring in the frictional connection into a self-healing glass.

2. Braking system according to claim 1 **characterised in that** the brake disk is made of a fibre-reinforced, carbon and/or oxide ceramic-containing compound material, the matrix of which contains silicon carbide (SiC) and/or silicon (Si) and/or silicon alloys in at least one marginal layer.

3. Braking system according to claim 1 or claim 2 **characterised in that** the friction lining is formed by a brake lining.

4. Braking system according to claim 3 **characterised in that** the antioxidant agent is distributed evenly over the brake lining.

## Revendications

1. Dispositif de freinage pour un véhicule, notamment pour un véhicule automobile,
avec un disque de frein et avec une garniture de frottement, une liaison de frottement étant établie entre le disque de frein et la garniture de frottement pendant l'opération de freinage,
**caractérisé en ce que** la garniture de frottement constitue un réservoir pour un agent protecteur antioxydant, de préférence des additifs, dans lequel sont placées des matières premières pour former des verres autorégénérateurs sans traitement thermique ultérieur, lequel réservoir transfère l'agent protecteur sur le disque de frein pendant la liaison de frottement entre la garniture de frottement et le disque de frein, lesquelles matières premières sont adaptées de telle sorte qu'elles sont transformables en un verre autorégénérateur dans le disque de frein par la chaleur de frottement dégagée lors de la liaison de frottement.

2. Dispositif de freinage selon la revendication 1, **caractérisé en ce que** le disque de frein est fabriqué à partir d'un matériau composite renforcé par des fibres, carboné et/ou oxydo-céramique, dont la matrice contient au moins dans une couche de surface du carbure de silicium (SiC) et/ou du silicium (Si) et/ou des alliages de silicium.

3. Dispositif de freinage selon la revendication 1 ou 2, **caractérisé en ce que** la garniture de frottement est formée par une garniture de frein.

4. Dispositif de freinage selon la revendication 3, **caractérisé en ce que** l'agent protecteur est réparti uniformément sur la garniture de frein.
